# EUROPEAN PATENT APPLICATION

(11) **EP 0 562 205 A1**
(43) Date of publication of application: **29.09.1993**
(21) Application number: 92430011.4
(22) Date of filing: 24.03.1992
(51) Int. Cl.: C08F 10/02, C08F 4/69

(54) **Process for the preparation of a polymerisation catalyst**

(71) Applicant: BP CHEMICALS S.N.C., F-92400 Courbevoie (FR)
(72) Inventor: Speakman, John Gabriel, F-13117 Lavera (FR)
(74) Representative: Hymers, Ronald Robson

(57) **Abstract**

Process for the polymerisation of ethylene or the copolymerisation of ethylene and at least one higher olefin comprising 3 to 12 carbon atoms. The process involves the use of an activated chromium catalyst on a refractory oxide support together with an organo metallic compound of a metal selected from the group consisting of magnesium, boron and zinc.

The process enables polymers of higher density to be produced compared with those obtained with conventionally used organo-metallic compounds. The catalyst used also tends to reduce fouling and agglomeration in a gas phase reactor.

## Description

The present invention relates to a process for the polymerisation of ethylene or copolymerisation of ethylene or alpha olefin for example in the gas phase in the presence of catalyst. The catalyst comprises a chromium oxide associated with a granular support comprising a refractory oxide and activated by heat treatment.

It is already known that ethylene can be polymerised alone or in a mixture with alpha olefins in the presence of catalyst comprising a chromium oxide compound associated with granular support comprising a refractory oxide and activated by heat treatment. Thus GB 1429174 discloses the preparation of a catalyst for the polymerisation of olefins in which the catalyst comprises a chromium oxide and a refractory oxide support.

In the polymerisation stage of the gas phase production of polyethylene TEA (triethyl aluminium) may be used as a scavenger to remove poisons from the hexane solvent. Under these conditions the ethylene can oligomerise to give butene, hexene etc which can subsequently be incorporated in the polymer to give short chain branches. This gives less dense chain packing and consequently a lower density polymer. To produce a higher polymer density it is necessary to reduce the level of TEA in the polymerising medium. This is not always convenient as it can be cheaper to use a scavenger than to purify the hexane.

Thus according to the present invention there is provided a process for the polymerisation of ethylene or the copolymerisation of ethylene and at least one higher olefin comprising 3 to 12 carbon atoms, the process being characterised by the use of an activated chromium catalyst on a refractory oxide support together with an organo metallic compound of a metal selected from the group consisting of magnesium, boron and zinc.

The organometallic compounds used in activated chromium catalysts are normally organoaluminium compounds, eg aluminium triethyl, aluminium triisobutyl, or aluminium tri-n-octyl. Nevertheless, these organometallic compounds have the disadvantage, in the presence of chromium catalysts, of forming oligomers of ethylene, which are easily incorporated in the polythene and thus lower its density. In the presence of the organoaluminium compounds, it is then not possible to produce polymers of as high a density as desired.

It has been found, however, that this drawback can be avoided, and a high density polymer can be prepared if the said activated catalysts or prepolymers are introduced into the polymerisation reactor together with an organo metallic compound of a metal selected from the group consisting of magnesium, boron and zinc such as dibutyl magnesium. The organo metallic compounds of magnesium, boron and zinc have antistatic properties which in the gas phase reactor tend to reduce fouling and agglomeration.

The invention also includes a catalyst whenever prepared by the above process. The invention further includes a process for the polymerisation of ethylene or the copolymerisation of ethylene and at least one higher olefin comprising 3 to 12 carbon atoms which uses the catalyst as hereinbefore described. The invention further includes the polymerisation product of the process for the polymerisation of ethylene or the copolymerisation of ethylene and at least one higher olefin comprising 3 to 12 carbon atoms.

The refractory oxide support material is preferably silica. Examples of preferred types of silica are microspheroidal silica and silica gel. Other refractory oxides such as alumina, zirconium oxide, thorium oxide, titanium oxide or mixtures or co-precipitates of at least two of the aforesaid compounds may also be used.

The catalyst may be used in the form of catalytically active particles of pre-polymer which are obtained during a separate pre-polymerisation reaction. This involves reacting the catalyst with ethylene or a suitable hydrocarbon mixture to produce a pre-polymer having the desired catalyst content. This procedure is disclosed in European patent application no. 0175532A.

The invention will now be described by way of example only.

### Example 1

### a) Activation of the catalyst

A powder catalyst sold by Joseph Crosfield & Sons (Warrington, Great Britain) under the name "SD 200", is subjected for 5 hours to a thermal treatment at 525°C, assisted by a current of dry air, in a fluidised bed reactor. This catalyst consists of a complex of chromium acetyl acetonate and aluminium tri-isobutyl on a silica support, and contains 0.36% by weight of chromium and 0.6% by weight of aluminium. After the activation, the catalyst is cooled to ambient temperature, and kept in a nitrogen atmosphere during its storage.

### b) Prepolymerisation in suspension

500 litres of n-hexane heated to 75°C is transferred, under nitrogen, to a 1000 litre stainless steel reactor fitted with a stirrer rotating at 140 rpm. 200 mmol of aluminium triethyl and 5.7 kg of the previously prepared catalyst are then added. Ethylene is then introduced, at a rate of 15 kg/h, for 3 hours. At the end of this time, the addition of ethylene is stopped, and the suspension of prepolymer thus obtained is kept at a temperature of 75°C for 30 minutes in order to consume the maximum quantity of ethylene that has not reacted. The reactor is then degassed, and then cooled to 60°C. The stirring is stopped, and about 300 litres of the liquid phase of the prepolymer is decanted off.

300 litres of n-hexane, previously heated to 60°C, is added to the prepolymer suspension which is maintained under these conditions, with stirring, for 15 minutes before separating about 300 litres of the liquid phase from this suspension. This operation is repeated twice; the prepolymer suspension is then cooled to ambient temperature (20°C) and 400 mmol of aluminium triethyl is added. After drying, under nitrogen about 50 kg of prepolymer, in powder form is obtained.

### c) Polymerisation in a fluidised bed

A fluidised bed type, stainless steel reactor of 45 cm diameter is purged 4 times with nitrogen at a pressure of 1.8 MPa at 85°C in order to reduce the atmospheric moisture content of the reactor to 10 vpm. As a powder charge, 70 kg of a polyethylene powder, stored under nitrogen, and having a bulk density of 0.45 g/ml, a density of 0.951 g/ml, a chromium content of 6.5 ppm and a melt index (MI8.5) of 1.43 g/10 minutes measured at 190°C under a load of 8.5 kg, is then added to the reactor. This polyethylene powder is purged with nitrogen at 104°C until a reactor atmospheric moisture content of 3 vpm is obtained. A gaseous mixture of hydrogen, ethylene and nitrogen, at a flow rate of 80 cm/s at a temperature of 104°C, is then passed into the reactor. The partial pressures of the three ingredients of this gaseous mixture are:
Hydrogen = 0.4 MPa
Ethylene = 1.0 MPa
Nitrogen = 0.6 MPa
0.7 litres of a molar solution of aluminium triethyl in n-hexane is then transferred to the reactor which is maintained under these conditions for 1 hour. The previously prepared polymer is then transferred to the reactor in 10 g portions every 5 minutes.

About 3 hours after starting the addition of the prepolymer, 9 ml/hour of a molar solution of magnesium dibutyl (Lithium Corporation of Europe) is continuously injected directly into the reactor.

It is noted that the polymerisation reaction starts as soon as the prepolymer is introduced into the reactor. These polymerisation conditions are maintained for 24 hours, 4 kg/hr of polymer being withdrawn from the reactor.

It is noted that in the course of this experiment, the chromium content, the density and the melt index (MI8.5) of the polymer constituting the fluidised bed remain virtually constant, ie 6.5 ppm, 0.951 g/ml and 1.43 g/10 minutes respectively.

The movement of the silica particles around the fluidised bed reactor tends to cause static build up which can cause problems of fouling or agglomeration. The presence of the magnesium dibutyl, introduced after catalyst activation, tends to reduce or eliminate this static build up.

### Example A (comparative)

The procedure is exactly the same as that used for example 1, except that instead of the continuous transfer to the reactor of 9 ml/h of molar solution of magnesium dibutyl, 9 ml/h of a molar solution of aluminium triethyl is transferred. After reacting for 24 hours, the chromium content, the density and the melt index (MI8.5) of the polymer constituting the fluidised bed are 6.5 ppm, 0.947 g.ml and 1.70 g/10 minutes respectively.

Comparison of example 1 with example A shows that by using magnesium dibutyl as the organometallic compound for polymerisation, a polymer whose density is 0.004 g/ml higher than that prepared using aluminium triethyl is obtained.

### Example 2

### a) Activation of the catalyst

A powder catalyst sold by the PQ Corporation (Philadelphia, USA) under the name C2306 is subjected for 5 hours to a thermal treatment at 550°C in a fluidised bed reactor with the aid of a current of dry air. This catalyst contains 1.0% by weight of chromium and 3.5% of titanium on a silica support. After activation, the catalyst is cooled to ambient temperature and kept under an atmosphere of nitrogen during its storage.

### b) Polymerisation in the stirred dry phase

200 g of a polyethylene powder (A), as the charge powder, whose characteristics are compiled in table 1, is transferred, under nitrogen, to a 2.6 litre stainless steel reactor fitted with a helical stirrer rotating at 350 rpm, and is then heated to 102°C. 0.5 mmol of a 0.98 M solution of magnesium dibutyl in n-hexane is then added. After the time necessary for dispersing the magnesium dibutyl in the powder (about 15 minutes), 0.025 milliatom (130 mg) of the previously prepared catalyst, hydrogen up to a pressure of 0.4 MPa, and ethylene up to a total pressure of 1.4 MPa, are added, the pressure being kept constant by the addition of ethylene. After polymerisation for 1 hour 50 minutes, the reactor is cooled to ambient temperature (20°C) and is degassed.

A mixture (B) of powder consisting of 200 g of charge powder and about 400 g of polyethylene is recovered in the course of this polymerisation. The characteristics of the polyethylene produced are calculated (C) and shown in table 1.

### Example B (comparative)

The procedure is exactly the same as that used in example 2, except that, instead of adding 0.5 mmol of magnesium dibutyl, 0.5 mmol of aluminium triethyl is added. The characteristics of the charge powder (D), its mixture (E) with the polymer produced in the course of this polymerisation, and those calculated for the polymer produced (F), are given in table 1.

Comparison of example 2 with example B shows that, if magnesium dibutyl is used as the organometallic compound for the polymerisation, a polymer having a density of 0.004 g/ml higher than that prepared using aluminium triethyl is obtained.

**Table 1**

| Characteristics of the polyethylenes produced and used in the form of the charge powder. | | | | | |
|---|---|---|---|---|---|
| Ethylene Powder | Weight g | MI8.5 | MI21.6 | n | Density (g/ml) |
| A | 200 | 2.10 | 19.5 | 2.39 | 0.956 |
| B | 600 | 2.40 | 21.0 | 2.33 | 0.956 |
| C | 400 | 2.56 | 21.8 | 2.30 | 0.956 |
| D | 200 | 0.3 | 3.3 | 2.57 | 0.953 |
| E | 600 | 1.0 | 7.9 | 2.22 | 0.952 |
| F | 400 | 1.83 | 12.2 | 2.03 | 0.952 |

## Claims

1. A process for the polymerisation of ethylene or the copolymerisation of ethylene and at least one higher olefin comprising 3 to 12 carbon atoms, the process being characterised by the use of an activated chromium catalyst on a refractory oxide support together with an organo metallic compound of a metal selected from the group consisting of magnesium, boron and zinc.

2. A process according to claim 1 in which the organo-metallic compound is an alkyl of magnesium, boron or zinc.

3. A process according to claim 1 or claim 2 in which the refractory oxide support material is silica, alumina, zirconium oxide, thorium oxide, titanium oxide or mixtures or co-precipitates of at least two of the aforesaid compounds.
